(19) Europäisches Patentamt
European Patent Office
Office européen des brevets

(11) **EP 1 655 180 B1**

(12) **EUROPÄISCHE PATENTSCHRIFT**

(45) Veröffentlichungstag und Bekanntmachung des Hinweises auf die Patenterteilung:
**14.03.2007  Patentblatt 2007/11**

(51) Int Cl.:
***B60R 21/01*** *(2006.01)*

(21) Anmeldenummer: **04026078.8**

(22) Anmeldetag: **03.11.2004**

(54) **Verfahren zum Beurteilen einer Rotationsbewegung eines Kraftfahrzeugs**

Method for evaluating a rotational movement of a vehicle

Procédé d'évaluation du mouvement de rotation d'un véhicule

(84) Benannte Vertragsstaaten:
**AT BE BG CH CY CZ DE DK EE ES FI FR GB GR HU IE IS IT LI LU MC NL PL PT RO SE SI SK TR**

(43) Veröffentlichungstag der Anmeldung:
**10.05.2006  Patentblatt 2006/19**

(73) Patentinhaber: **Delphi Technologies, Inc.**
**Troy, MI 48007 (US)**

(72) Erfinder: **Darvish, Abtin**
**42119 Wuppertal (DE)**

(74) Vertreter: **Manitz, Finsterwald & Partner GbR**
**Postfach 31 02 20**
**80102 München (DE)**

(56) Entgegenhaltungen:
**EP-A- 1 388 474**   **US-A1- 2002 173 882**
**US-B1- 6 363 306**

## Beschreibung

Die Erfindung betrifft ein Verfahren zum Beurteilen einer Rotationsbewegung, insbesondere einer Roll- oder Überschlagbewegung, eines Kraftfahrzeugs, bei dem die Winkelgeschwindigkeit des Fahrzeugs um wenigstens eine Fahrzeugachse, insbesondere um die Längsachse, die horizontale Querachse und/oder die vertikale Querachse des Fahrzeugs, mehrfach gemessen wird.

Ein Verfahren gemäß dem Oberbegriff des Anspruchs 1 ist aus der US-A-2002/0173882 bekannt.

Verfahren der eingangs genannten Art werden beispielsweise zur Erkennung von gefährlichen Roll- oder Überschlagbewegungen eines Kraftfahrzeugs eingesetzt, um gegebenenfalls geeignete Sicherheitsmaßnahmen einleiten zu können, z. B. das Ausfahren eines Überrollbügels und/oder die Straffung von Sicherheitsgurten.

Zur Ermittlung der Roll- oder Überschlagbewegung werden üblicherweise die Winkelgeschwindigkeit des Fahrzeugs um seine Längsachse sowie die laterale und vertikale Beschleunigung des Fahrzeugs gemessen. Der Roll- bzw. Rotationswinkel des Fahrzeugs wird durch eine numerische Integration der Rollrate bzw. Winkelgeschwindigkeit ermittelt und ggf. durch die gemessenen Beschleunigungswerte in lateraler oder vertikaler Richtung korrigiert.

Typische Roll- oder Überschlagbewegungen, wie beispielsweise eine Rollbewegung eines Kraftfahrzeugs über eine Leitplanke oder eine Böschung hinab, laufen vergleichsweise langsam ab. Üblicherweise erhöht sich der Rollwinkel des Kraftfahrzeugs in solchen Fällen in etwa 1 bis 2 Sekunden von 0° auf 90°, d.h. das Fahrzeug kippt in 1 bis 2 Sekunden aus seiner normalen Straßenlage auf die Seite. Da bei einer derartigen langsamen Rollbewegung ein vergleichsweise geringes Risiko von Kopfverletzungen der Fahrzeuginsassen besteht, ist eine Detektionszeit von etwa 600 bis 700 ms, die einem Rollwinkel von etwa 30° bis 40° entspricht, ausreichend, um beispielsweise einen Überrollbügel oder Airbag zu aktivieren.

Als problematisch erweisen sich jedoch schnellere Roll- oder Überschlagbewegungen, wie sie bei Sandeinzug, d.h. bei einem zumindest teilweisen Abkommen des Fahrzeugs von einer befestigten Fahrbahn, oder bei einem Kontakt des Fahrzeugs mit einer Bordsteinkante vorkommen können. Zur wirksamen Vermeidung von Verletzungen der Fahrzeuginsassen ist in solchen Fällen eine zuverlässige Detektion der Rotationsbewegung bereits bei einer Verkippung des Fahrzeugs um weniger als 10° wünschenswert. Dies erfordert eine schnelle Detektion der Roll- oder Überschlagbewegung im Bereich von höchstens 100 bis 200 ms.

Zur Erreichung einer derartigen schnellen Detektionszeit lässt sich bei dem voranstehend beschriebenen bekannten Verfahren jedoch die Detektionszeit von 600 bis 700 ms nicht ohne weiteres auf 100 bis 200 ms reduzieren, da eine derartige Maßnahme die Empfindlichkeit des Verfahrens so stark erhöhen würde, dass auch solche Rotationsbewegungen des Fahrzeugs als Roll- oder Überschlagbewegungen erkannt würden, die in Wirklichkeit gar keine Roll- oder Überschlagbewegungen sind. Sicherheitsmaßnahmen würden unter Umständen also unnötig eingeleitet.

Der Erfindung liegt die Aufgabe zugrunde, ein Verfahren zum Beurteilen einer Rotationsbewegung eines Kraftfahrzeugs zu schaffen, welches eine zuverlässige Detektion von sowohl langsamen als auch schnellen Roll- oder Überschlagbewegungen des Fahrzeugs ermöglicht.

Zur Lösung der Aufgabe ist ein Verfahren mit den Merkmalen des Anspruchs 1 vorgesehen.

Bei dem erfindungsgemäßen Verfahren zum Beurteilen einer Rotationsbewegung, insbesondere einer Roll- oder Überschlagbewegung, eines Kraftfahrzeugs, wird die Winkelgeschwindigkeit des Fahrzeugs um wenigstens eine Fahrzeugachse, insbesondere um die Längsachse, die horizontale Querachse und/oder die vertikale Querachse des Fahrzeugs, mehrfach gemessen. Aus zwei gemessenen Winkelgeschwindigkeiten wird die Winkelbeschleunigung des Fahrzeugs um die wenigstens eine Fahrzeugachse ermittelt, und die ermittelte Winkelbeschleunigung wird bei der Beurteilung der Rotationsbewegung berücksichtigt. Die Gefährlichkeit einer Rotationsbewegung des Fahrzeugs wird aus der Stärke und der Dauer der Winkelbeschleunigung ermittelt.

Grundsätzlich wird die Rotationsbewegung eines Körpers durch folgende Formel beschrieben:

$$\varphi(t) = \varphi(0) + (\omega \cdot t) + (1/2(\alpha \cdot t^2)) \qquad (1)$$

wobei $\varphi(t)$ die Winkelposition zum Zeitpunkt t, $\omega$ die Winkelgeschwindigkeit $\left(\dfrac{\delta\varphi}{\delta t}\right)$ und $\alpha$ die Winkelbeschleunigung

$$\left(\frac{d^2\varphi}{dt^2}\right)$$ ist. Bei zeitlich beabstandeten Messungen der Winkelgeschwindigkeit stellt *dt* jeweils den Zeitabstand zwischen zwei aufeinander folgenden Messungen der Winkelgeschwindigkeit bzw. den Zeitabstand zur letzten Berechnung der Winkelposition dar.

Bei langsamen bzw. gleichförmigen Veränderungen des Rotationswinkels φ(t) kann der dritte Term der Gleichung (1) vernachlässigt und der Rotationswinkel φ(t) durch die folgende Formel angenähert werden:

$$\varphi(t) \;=\; \varphi(0) \;+\; (\omega \cdot t) \tag{2}$$

Herkömmlicherweise wird die Rotationsbewegung eines Kraftfahrzeugs auf Grundlage der Gleichung (2) ermittelt. Zur Erkennung von langsamen Roll- oder Überschlagbewegungen ist die vereinfachte Gleichung (2) vollkommen ausreichend.

Bei schnellen Roll- oder Überschlagbewegungen, z. B. aufgrund von Sandeinzug oder bei Kontakt mit einer Bordsteinkante, kann der Rotationswinkel innerhalb bestimmter Bereiche jedoch exponentiell anwachsen.

Erfindungsgemäß ist deshalb eine Berücksichtigung auch des dritten Terms von Gleichung (1), d.h. eine Berücksichtigung der Winkelbeschleunigung, bei der Beurteilung der Rotationsbewegung eines Kraftfahrzeugs vorgesehen.

Dies ermöglicht eine besonders zuverlässige Beurteilung der Rotationsbewegung. Insbesondere lässt sich von der Stärke und Dauer der Winkelbeschleunigung besonders gut auf die Gefährlichkeit einer Rotationsbewegung des Kraftfahrzeugs schließen, wodurch die Sicherheit der Fahrzeuginsassen im Fall eines Überschlags des Fahrzeugs erheblich erhöht ist.

Die Winkelbeschleunigung des Fahrzeugs wird erfindungsgemäß direkt aus den gemessenen Winkelgeschwindigkeiten ermittelt, nämlich durch die Bildung der Differenz zwischen zwei, vorzugsweise nacheinander gemessenen Winkelgeschwindigkeiten. Mit anderen Worten wird die Winkelbeschleunigung aus der Geschwindigkeitsänderung während eines vorgegebenen Zeitintervalls, d.h. also durch die zeitliche Ableitung der gemessenen Winkelgeschwindigkeiten errechnet.

Zur Durchführung des erfindungsgemäßen Verfahrens ist es daher nicht erforderlich, zusätzliche Sensoren zur Messung der Winkelbeschleunigung im Fahrzeug vorzusehen. Vielmehr kann auf die Messdaten der bereits vorhandenen Sensoren zur Messung der Winkelgeschwindigkeit zurückgegriffen werden.

Dadurch lässt sich das erfindungsgemäße Verfahren leicht in ein bestehendes Fahrzeugsicherheitssystem integrieren. Erforderlich ist hierfür lediglich eine Änderung des Rechenalgorithmus, mit anderen Worten also eine einfache Umprogrammierung einer entsprechenden Auswerteeinheit.

Gemäß einer vorteilhaften Ausbildung des erfindungsgemäßen Verfahrens werden die Winkelgeschwindigkeit und die Winkelbeschleunigung zumindest zeitweise periodisch mit einer Periode T1 ermittelt.

Die Länge der Periode T1 wird vorzugsweise besonders kurz gewählt und entspricht idealerweise dem Zeitintervall, in dem die Messwerte der Geschwindigkeitssensoren abgefragt werden. Die Länge der Periode T1 kann aber auch ein Mehrfaches dieser Intervalle betragen. Damit die Erkennung einer Roll- oder Überschlagbewegung in etwa 100 ms bis 200 ms erfolgen kann, sollte die Länge der Periode T1 jedoch nicht mehr als wenige 10 ms betragen.

Wie bereits erwähnt wurde, wird die Winkelbeschleunigung aus der Differenz zwischen zwei Winkelgeschwindigkeiten errechnet, die mit einem Abstand von einer Periodenlänge gemessen wurden. Korrekterweise muss die Geschwindigkeitsdifferenz zur Berechnung der Beschleunigung durch die Länge der Periode T1 geteilt werden. Bei einer konstanten Periodenlänge T1 ist es jedoch einfacher, die Länge der Periode T1 als "1" zu definieren. Errechnet wird auf diese Weise eine auf die Länge der Periode T1 normierte Winkelbeschleunigung.

Gemäß einer weiteren vorteilhaften Ausführungsform wird ein zur Beurteilung der Rotationsbewegung beitragender Zähler erhöht, wenn die Winkelbeschleunigung einer Periode T1 einen Schwellwert überschreitet. Entsprechend kann der Zähler erniedrigt werden, wenn die Winkelbeschleunigung einer Periode T1 den Schwellwert unterschreitet.

Nach jeder Ermittlung der Winkelbeschleunigung wird die ermittelte Winkelbeschleunigung also mit einem Schwellwert verglichen und geprüft, ob die ermittelte Winkelbeschleunigung den Schwellwert über- oder unterschreitet. Bei jeder Überschreitung des Schwellwerts wird der Zähler erhöht und/oder bei einer Unterschreitung des Schwellwerts erniedrigt. Der Zähler ist mit anderen Worten ein Maß dafür, wie oft die ermittelte Winkelbeschleunigung den Schwellwert überschritten bzw. unterschritten hat. Der Zähler ist somit ein Indikator für die Stärke und Dauer der ermittelten Winkelbeschleunigung.

Die Erhöhung und/oder Erniedrigung des Zählers kann jeweils um einen vorgegebenen festen, insbesondere ganzzahligen, Betrag erfolgen.

Bevorzugt erfolgt die Erhöhung und/oder Erniedrigung des Zählers jedoch jeweils um einen vorgegebenen, insbesondere ganzzahligen, Betrag, dessen Größe von der Abweichung der ermittelten Winkelbeschleunigung von dem Schwellwert abhängig ist.

Beispielsweise kann der Zähler bei einer geringen Über- bzw. Unterschreitung um den Wert "1", bei einer mittleren Über- bzw. Unterschreitung um den Wert "2" und bei einer besonders hohen Über- bzw. Unterschreitung des Schwellwerts um den Wert "4" erhöht bzw. erniedrigt werden. Die voranstehenden Werte sind rein beispielhaft genannt und können je nach Anwendungsfall auch anders gewählt sein. Ebenso ist es möglich, die gemessenen Winkelbeschleunigungen in weniger oder mehr Kategorien zu unterteilen, als die genannten Kategorien "gering", "mittel" und "hoch". Darüber hinaus ist es möglich, die genannten Kategorien und/oder Werte für die Überschreitung des Schwellwerts und für die Unterschreitung des Schwellwerts unterschiedlich festzulegen.

Durch die an die Stärke der Abweichung der Winkelbeschleunigung von dem Schwellwert angepasste Erhöhung bzw. Erniedrigung des Zählers wird der Stärke der gemessenen Winkelbeschleunigung in besonderer Weise Rechnung getragen. Dadurch können hohe Winkelbeschleunigungen besonders schnell detektiert werden. Dies ermöglicht eine noch schneller Erkennung einer gefährlichen Roll- oder Überschlagbewegung und dadurch eine noch frühzeitigere Aktivierung des Fahrzeugsicherheitssystems.

Alternativ kann die Erhöhung und/oder Erniedrigung des Zählers proportional zur Abweichung der ermittelten Winkelbeschleunigung von dem Schwellwert sein. Auch bei dieser Variante wirkt sich die Stärke der Abweichung der ermittelten Winkelbeschleunigung von dem Schwellwert direkt auf das Maß der Erhöhung bzw. Erniedrigung des Zählers aus. Diese Variante ermöglicht somit ebenfalls eine besonders rasche Erkennung einer gefährlichen Winkelbeschleunigung und dadurch letztlich eine erhöhte Sicherheit der Fahrzeuginsassen.

Vorzugsweise wird die Rotationsbewegung als kritisch eingestuft, wenn der Zähler einen vorbestimmten Zählerschwellwert überschreitet. Durch den Zählerschwellwert ist festgelegt, wie lange die ermittelten Winkelgeschwindigkeiten einer gewissen Stärke unbeachtlich bleiben bzw. ab wann sie als gefährlich eingestuft werden.

So kann der Zählerschwellwert überschritten werden, wenn die ermittelten Winkelbeschleunigungen über einen Zeitraum von mehreren Perioden T1 hinweg den vorgegebenen Schwellwert nur leicht überschreiten oder zeitweilig sogar unterschreiten. Dieser Fall tritt insbesondere bei langsamen Rotationsbewegungen auf. Durch eine entsprechende Festsetzung des Zählerschwellwerts können somit auch langsame Roll- oder Überschlagbewegungen frühzeitig erkannt werden.

Wird der Zähler in Abhängigkeit von der Stärke der Abweichung der Winkelbeschleunigung von dem Schwellwert erhöht, so kann der Zähler bei einer entsprechender Stärke der Winkelbeschleunigung und bei einer entsprechenden Vorgabe der Schrittweite, mit welcher der Zähler erhöht wird, auch nach wenigen, z.B. ein oder zwei, Perioden T1 bereits den Zählerschwellwert überschreiten. Somit sind auch schnelle Roll- oder Überschlagbewegungen rechtzeitig detektierbar und entsprechende Sicherheitsmaßnahmen frühzeitig einleitbar.

Gemäß einer weiteren vorteilhaften Ausbildung des erfindungsgemäßen Verfahrens wird zusätzlich eine zweite Winkelbeschleunigung aus zwei Winkelgeschwindigkeiten ermittelt, die ein Zeitintervall T2 definieren, welches ein ganzzahliges Vielfaches der Periode T1 ist.

Die Winkelgeschwindigkeit und die Winkelbeschleunigung werden einerseits also periodisch mit einer Periode T1 ermittelt, und andererseits wird zusätzlich über mehrere Perioden T1 hinweg eine zweite Winkelbeschleunigung ermittelt. Es findet also eine periodische Bestimmung von zwei Winkelbeschleunigungen über unterschiedlich lange Zeitfenster statt.

Durch die Ermittlung der zweiten Winkelgeschwindigkeitsänderung über einen längeren Zeitraum bleiben kurzzeitige Schwankungen der ersten ermittelten Winkelbeschleunigung unberücksichtigt, die beispielsweise durch Fehler bei der Messung der ersten Winkelgeschwindigkeiten verursacht werden können. Hierdurch wird sichergestellt, dass die ermittelten Winkelbeschleunigungen keine Artefakte, sondern tatsächlich durch eine Roll- oder Überschlagsbewegung des Fahrzeugs verursacht sind.

Vorzugsweise wird die Rotationsbewegung als kritisch eingestuft, wenn sowohl die zweite Winkelbeschleunigung als auch jede innerhalb des Zeitintervalls T2 ermittelte erste Winkelbeschleunigung jeweils einen vorbestimmten Schwellwert überschreitet. Die Schwellwerte für die erste und die zweite Winkelbeschleunigung können gleich oder unterschiedlich gewählt sein, wobei im letzteren Fall der Schwellwert für die erste Winkelbeschleunigung bevorzugt etwas niedriger als der Schwellwert für die zweite Winkelbeschleunigung zu wählen ist.

Dadurch, dass die Rotationsbewegung nur dann als kritisch eingestuft wird, wenn alle Winkelbeschleunigungen, d.h. sowohl alle ersten Winkelbeschleunigungen als auch die zweite Winkelbeschleunigung, ihren jeweiligen Schwellwert überschreiten, ist sichergestellt, dass ausnahmslos relevante Rotationsbewegungen als gefährlich eingestuft werden. Dies erhöht die Zuverlässigkeit der Erkennung einer Roll- oder Überschlagbewegung und verhindert eine unnötige Aktivierung des Fahrzeugsicherheitssystems.

Ein weiterer Gegenstand der Erfindung ist ein Verfahren zum Aktivieren eines Fahrzeugsicherheitssystems, bei dem das Fahrzeugsicherheitssystem aktiviert wird, wenn eine nach einem Verfahren gemäß Anspruch 7 oder 9 detektierte Rotationsbewegung eines Kraftfahrzeugs um eine Fahrzeugachse, insbesondere um die Längsachse, die horizontale Querachse und/oder die vertikale Querachse des Fahrzeugs, als kritisch eingestuft wird.

Da die Aktivierung des Fahrzeugsicherheitssystems auf dem erfindungsgemäßen Verfahren zum Beurteilen der Rotationsbewegung des Kraftfahrzeugs basiert, gelten die voranstehend genannten Vorteile entsprechend.

Dadurch, dass die Beurteilung der Rotationsbewegung des Kraftfahrzeugs erfindungsgemäß besonders schnell erfolgt und deshalb sowohl langsame als auch schnelle Roll- oder Überschlagbewegungen des Fahrzeugs detektierbar sind, wird das Fahrzeugsicherheitssystem sowohl bei einer langsamen als auch bei einer schnellen Roll- oder Überschlagbewegung des Fahrzeugs frühzeitig aktiviert. In beiden Fällen können Sicherheitsmaßnahmen zum Schutz der Fahrzeuginsassen rechtzeitig eingeleitet werden, wodurch die Sicherheit der Fahrzeuginsassen erhöht ist.

Vorteilhafterweise wird das Fahrzeugsicherheitssystem nur dann aktiviert, wenn zusätzlich die Winkelgeschwindigkeit und/oder die Winkelposition des Fahrzeugs bezüglich der Fahrzeugachse jeweils innerhalb eines vorbestimmten kritischen Bereichs liegen bzw. liegt. Die ermittelten Winkelbeschleunigungen stellen mit anderen Worten nicht das alleinige Kriterium zur Aktivierung des Fahrzeugsicherheitssystems dar, sondern auch die Winkelgeschwindigkeit und/ oder die Winkelposition des Fahrzeugs müssten innerhalb eines kritischen Bereichs liegen. Auf diese Weise wird eine unnötige Aktivierung des Fahrzeugsicherheitssystems wirksam vermieden und die Sicherheit der Fahrzeuginsassen noch weiter erhöht.

Gemäß einer weiteren Ausführungsform wird das Fahrzeugsicherheitssystem nur dann aktiviert, wenn zusätzlich die Winkelbeschleunigung, die Winkelgeschwindigkeit und/oder die Winkelposition des Fahrzeugs bezüglich der anderen Fahrzeugachse oder Fahrzeugachsen jeweils innerhalb eines vorbestimmten kritischen Bereichs liegen bzw. liegt. Gegebenenfalls kann also die Rotationsbewegung des Fahrzeugs um alle drei Fahrzeugachsen und somit in allen drei Raumrichtungen bei der Aktivierung des Fahrzeugsicherheitssystems berücksichtigt werden. Dadurch wird eine unnötige Aktivierung des Fahrzeugsicherheitssystems noch besser vermieden und die Sicherheit der Fahrzeuginsassen noch weiter erhöht.

Ein weiterer Gegenstand der Erfindung ist außerdem eine Vorrichtung zur Beurteilung einer Rotationsbewegung, insbesondere einer Roll- oder Überschlagbewegung, eines Kraftfahrzeugs, mit wenigstens einem Sensor zum Messen der Winkelgeschwindigkeit des Fahrzeugs um eine Fahrzeugachse, insbesondere um die Längsachse, die horizontale Querachse oder die vertikale Querachse des Fahrzeugs, einer mit dem Sensor verbundenen Recheneinheit zur Ermittlung der Winkelbeschleunigung des Fahrzeugs um die wenigstens eine Fahrzeugachse aus zwei gemessenen Winkelgeschwindigkeiten, einer mit der Recheneinheit verbundenen Komparatoreinheit zum Vergleichen der ermittelten Winkelbeschleunigung mit einem vorgegebenen Schwellwert, und einer mit der Komparatoreinheit verbundenen Auswerteeinheit zum Auswerten einer Abweichung der ermittelten Winkelbeschleunigung von dem Schwellwert.

Mit der erfindungsgemäßen Vorrichtung lassen sich die erfindungsgemäßen Verfahren durchführen und die damit verbundenen Vorteile erreichen.

Die Recheneinheit zur Ermittlung der Winkelbeschleunigung, die Komparatoreinheit und die Auswerteeinheit können jeweils separate Einheiten sein, vorzugsweise sind sie jedoch in einer zentralen Recheneinheit zusammengefasst.

Die Erhöhung und/oder Erniedrigung eines zur Beurteilung der Rotationsbewegung beitragenden Zählers wird vorzugsweise in der Auswerteeinheit durchgeführt.

Alternativ können erste und zweite Winkelbeschleunigungen über jeweils unterschiedlich lange Zeitintervalle, d.h. mit unterschiedlichen Periodenlängen T1 und T2, in der Recheneinheit ermittelt, in der Komparatoreinheit mit vorgegebenen Schwellwerten verglichen und entsprechende Abweichungen von dem Schwellwert in der Auswerteeinheit ausgewertet werden.

Nachfolgend wird die Erfindung rein beispielhaft anhand einer vorteilhaften Ausführungsform unter Bezugnahme auf die beigefügte Zeichnung beschrieben. Es zeigen:

Fig. 1    ein Flussdiagramm einer Ausführungsform des erfindungsgemäßen Verfahrens zum Beurteilen einer Rotationsbewegung eines Kraftfahrzeugs; und

Fig. 2    ein Flussdiagramm einer Ausführungsform des erfindungsgemäßen Verfahrens zum Aktivieren eines Fahrzeugsicherheitssystems.

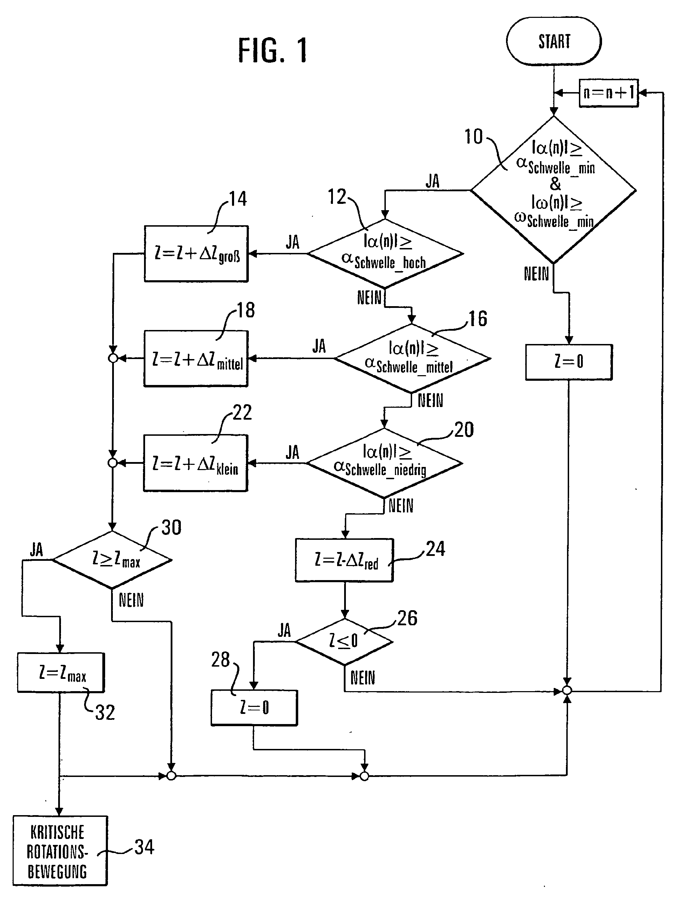

Das in Fig. 1 dargestellte Verfahren zum Beurteilen einer Rotationsbewegung eines Kraftfahrzeugs beruht auf der Auswertung eines Zählers Z, der immer dann erhöht wird, wenn eine aus gemessenen Winkelgeschwindigkeiten $\omega(n)$ ermittelte Winkelbeschleunigung $\alpha(n)$ einen vorgegebenen Schwellwert überschreitet, und der immer dann erniedrigt wird, wenn die Winkelbeschleunigung den Schwellwert unterschreitet.

Im vorliegenden Ausführungsbeispiel wird lediglich die Rotationsbewegung des Kraftfahrzeugs um seine Längsachse (X-Achse) beurteilt. Zusätzlich kann aber auch die Rotationsbewegung um die laterale Querachse (Y-Achse) und/oder um die vertikale Querachse (Z-Achse) des Kraftfahrzeugs beurteilt werden. Hierfür müssen lediglich entsprechende Sensoren zur Messung der Winkelgeschwindigkeit um die Y- bzw. Z-Achse vorgesehen sein. Die Ermittlung der Winkelbeschleunigung sowie die Beurteilung der Rotationsbewegung des Kraftfahrzeugs um die Y- bzw. Z-Achse erfolgen dann entsprechend dem nachfolgend beschriebenen Verfahren.

Das Verfahren wird bei Aktivierung des Kraftfahrzeugs gestartet, beispielsweise durch das Einschalten des Motors. Zu Beginn des Verfahrens erfolgt eine Initialisierung des Zählers Z, durch welche der Zähler Z auf den Wert "0" zurückgesetzt wird.

In regelmäßigen Zeitabständen, bei dem vorliegenden Ausführungsbeispiel alle 10 ms, wird mittels eines geeigneten Geschwindigkeitssensors die Rotationsgeschwindigkeit des Kraftfahrzeugs um die Längsachse (X-Achse) des Kraftfahrzeugs gemessen. Die Messung der Rotationsgeschwindigkeit erfolgt somit periodisch mit einer Periodenlänge T1, die im vorliegenden Fall 10 ms beträgt. Jede Periode T1 definiert einen Rechenschritt n, in dem aus jeweils zwei aufeinander folgend gemessenen Winkelgeschwindigkeiten $\omega(n)$ und $\omega(n-1)$ die Winkelbeschleunigung $\alpha(n)$ des Kraftfahrzeugs um seine Längsachse ermittelt wird.

Unter der Winkelbeschleunigung $\alpha(n)$ wird dabei die Änderung der Winkelgeschwindigkeit über den Zeitraum einer Periode T1 verstanden. Zur Vereinfachung des Rechenaufwands erfolgt die Beurteilung der Rotationsbewegung anhand von normierten Winkelbeschleunigungen, das heißt die Winkelbeschleunigungen werden nicht als Geschwindigkeitsänderungen pro Zeiteinheit berechnet, sondern pro Periodenlänge T1, die der Einfachheit halber auf den Wert "1" festgesetzt ist. Als Maß für die Winkelbeschleunigung dient letztlich also die Differenz zwischen jeweils nacheinander gemessenen Winkelgeschwindigkeiten $\omega(n)$ und $\omega(n-1)$.

Sobald in einem n-ten Rechenschritt eine Winkelgeschwindigkeit $\omega(n)$ gemessen und die zugehörige Winkelbeschleunigung $\alpha(n)$ ermittelt wurde, wird in einem Verfahrensschritt 10 geprüft, ob der Betrag der ermittelten Winkelbeschleunigung $\alpha(n)$ eine vorgegebene Mindestschwelle $\alpha_{Schwelle\_min}$ überschreitet. Gleichzeitig wird geprüft, ob der Betrag der entsprechenden Winkelgeschwindigkeit $\omega(n)$ eine vorbestimmte Mindestschwelle $\omega_{Schwelle\_min}$ überschreitet.

Sofern die Winkelbeschleunigung $\alpha(n)$ und/oder die Winkelgeschwindigkeit $\omega(n)$ unterhalb ihres jeweiligen Schwellwerts bleibt, wird der Zähler Z auf seinem Ausgangswert "0" belassen oder auf "0" zurückgesetzt und in einem nächsten Rechenschritt n+ 1 die Abfrage der Winkelgeschwindigkeit und Ermittlung der Winkelbeschleunigung wiederholt.

Überschreitet dagegen sowohl die gemessene Winkelgeschwindigkeit $\omega(n)$ als auch die ermittelte Winkelbeschleunigung $\alpha(n)$ ihren jeweiligen Schwellenwert $\omega_{Schwelle\_min}$ bzw. $\alpha_{Schwelle\_min}$, so wird der Zähler Z verändert.

Zu diesem Zweck wird in einem Verfahrensschritt 12 als nächstes geprüft, ob der Betrag der ermittelten Winkelbeschleunigung $\alpha(n)$ einen hohen Schwellwert $\alpha_{Schwelle\_hoch}$ überschreitet. Ist dies der Fall, so wird der Zähler Z in einem Verfahrensschritt 14 um einen großen Wert $\Delta Z_{groß}$ erhöht.

Überschreitet die ermittelte Winkelbeschleunigung $\alpha(n)$ den hohen Schwellwert $\alpha_{Schwelle\_hoch}$ jedoch nicht, so wird in einem Verfahrensschritt 16 als nächstes geprüft, ob der Betrag der Winkelbeschleunigung $\alpha(n)$ einen mittleren Schwellwert $\alpha_{Schwelle\_mittel}$ überschreitet. Wenn dies der Fall ist, wird der Zähler Z in einem Verfahrensschritt 18 um einen mittleren Wert $\Delta Z_{mittel}$ erhöht.

Wenn der Betrag der ermittelten Winkelbeschleunigung $\alpha(n)$ auch den mittleren Schwellwert $\alpha_{Schwelle\_mittel}$ nicht überschreitet, so wird in einem Verfahrensschritt 20 als nächstes geprüft, ob der Betrag der Winkelbeschleunigung $\alpha(n)$ einen vorbestimmten niedrigen Schwellwert $\alpha_{Schwelle\_niedrig}$ überschreitet. Ist dies der Fall, so wird der Zähler Z in einem Verfahrensschritt 22 um einen kleinen Wert $\Delta Z_{klein}$ erhöht.

Überschreitet der Betrag der ermittelten Winkelbeschleunigung $\alpha(n)$ auch den niedrigen Schwellwert $\alpha_{Schwelle\_niedrig}$ nicht, so wird der Zähler Z in einem Verfahrensschritt 24 um einen vorgegebenen Betrag $\Delta Z_{red}$ vermindert.

In diesem Fall wird in einem nachfolgenden Verfahrensschritt 26 geprüft, ob der Zähler Z durch die Verminderung kleiner als "0" geworden ist. Wenn dies der Fall ist, so wird der Zähler Z in einem Verfahrensschritt 28 zurück auf "0" gesetzt. Ist der Zähler Z nach der Verminderung im Schritt 24 dagegen positiv geblieben, so behält er seinen aktuellen Wert bei und überträgt diesen in den nächsten Rechenschritt n+1.

Im Falle einer Erhöhung des Zählers Z gemäß einem der Schritte 14, 18 oder 22 wird in einem Verfahrensschritt 30 geprüft, ob der Zähler Z einen Zählerschwellwert $Z_{max}$ überschreitet. Ist dies nicht der Fall, so behält der Zähler Z seinen aktuellen Wert bei, und es wird im nächsten Rechenschritt n+ 1 mit dem Verfahrensschritt 10 fortgefahren.

Wird im Verfahrensschritt 30 hingegen eine Überschreitung des Zählerschwellwerts $Z_{max}$ festgestellt, so wird dem Zähler Z in einem Verfahrensschritt 32 der Schwellwert $Z_{max}$ zugeordnet.

Eine Überschreitung des Zählerschwellwerts $Z_{max}$ führt dazu, dass die Rotationsbewegung des Kraftfahrzeugs in einem Verfahrensschritt 34 als kritisch eingestuft wird. Sie ist ein Indikator für eine gefährliche Roll- oder Überschlagbewegung des Fahrzeugs.

Eine kritische Rotationsbewegung kann zum einen durch eine besonders hohe Winkelbeschleunigung $\alpha(n)$ innerhalb einer Periode T1 oder innerhalb weniger Perioden T1, d.h. durch eine kurzzeitige hohe Winkelbeschleunigung, und zum anderen durch kleinere Winkelbeschleunigungen $\alpha(n)$ verursacht werden, die über mehrere Perioden T1 auftreten, d.h. also durch eine länger andauernde, geringere Beschleunigung.

Die Mindestschwelle $\omega_{Schwelle\_min}$ für die Winkelgeschwindigkeit $\omega(n)$ kann beispielsweise 20°/s bis 40°/s betragen. Ein möglicher Wert für die Mindestschwelle $\alpha_{Schwelle\_min}$ der auf die Periodenlänge T1 normierten Winkelbeschleunigung $\alpha(n)$ liegt beispielsweise zwischen 0°/s, 1°/s und 2°/s.

Demgegenüber kann der niedrige Beschleunigungsschwellwert $\alpha_{Schwelle\_niedrig}$ zwischen 1°/s und 5°/s, der mittlere Beschleunigungsschwellwert $\alpha_{Schwelle\_mittel}$ zwischen 2°/s und 8°/s und der hohe Beschleunigungsschwellwert $\alpha_{Schwelle\_hoch}$ zwischen 5°/s und 10°/s liegen.

Wie bereits erwähnt, sind die Winkelbeschleunigungen $\alpha(n)$ bei der dargestellten Ausführungsform des Verfahrens auf eine Periodenlänge T1 von "1" normiert. Die voranstehend genannten Schwellwerte der Beschleunigung weisen im vorliegenden Ausführungsbeispiel daher die gleiche physikalische Einheit wie die Winkelgeschwindigkeit auf, d.h. °/s.

Als mögliche Werte für die Beträge $\Delta Z_{klein}$, $\Delta Z_{mittel}$ und $\Delta Z_{groß}$, um welche der Zähler Z bei einer entsprechenden Schwellwertüberschreitung jeweils erhöht wird, kommen beispielsweise die Werte 1, 2 und 4 in Betracht.

Die Verminderung des Zählers Z im Falle einer Unterschreitung des Schwellwerts $\alpha_{Schwelle\_niedrig}$ kann z. B. um den Wert $\Delta Z_{red} = 1$ erfolgen. Ein möglicher Wert für den Zählerschwellwert $Z_{max}$ liegt zwischen 8 und 20.

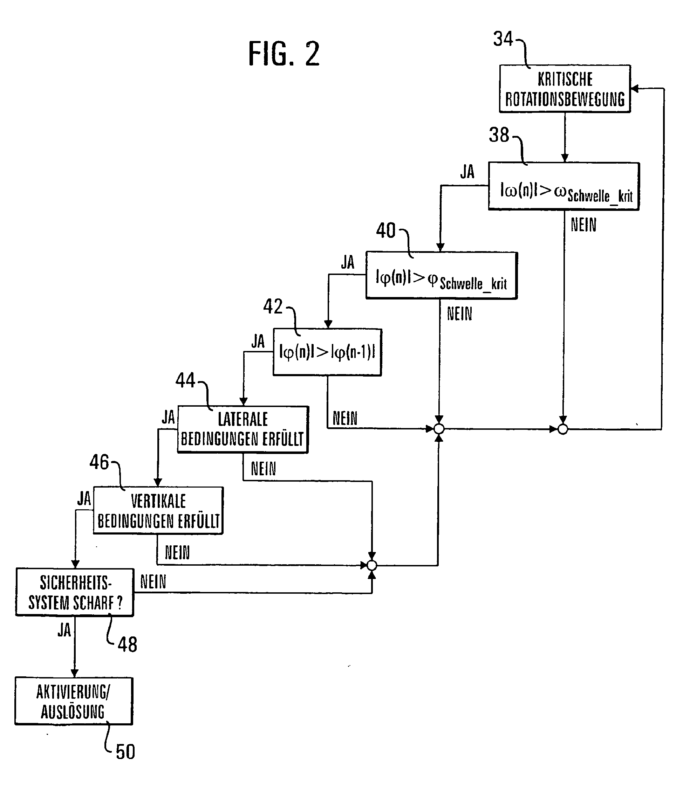

Sobald der Zähler Z den vorgegebenen Zählerschwellwert $Z_{max}$ im Verfahrensschritt 32 überschreitet und die Rotationsbewegung des Kraftfahrzeugs im Verfahrensschritt 34 als kritisch eingestuft wird, wird ein Verfahren zum Aktivieren eines Fahrzeugsicherheitssystems eingeleitet (Fig. 2).

Bei diesem Verfahren wird in einem Verfahrensschritt 38 zunächst geprüft, ob der Betrag der Winkelgeschwindigkeit $\omega(n)$ größer als eine vorgegebene kritische Geschwindigkeitsschwelle $\omega_{Schwelle\_krit}$ ist.

Liegt der Betrag der gemessenen Winkelgeschwindigkeit $\omega(n)$ unterhalb der kritischen Geschwindigkeitsschwelle $\omega_{Schwelle\_krit}$, so wird im nächsten Rechenschritt n+ 1 geprüft, ob noch immer eine kritische Rotationsbewegung vorliegt und gegebenenfalls der Vergleich der gemessenen Winkelgeschwindigkeit $\omega(n+1)$ mit dem kritischen Winkelgeschwindigkeitsschwellwert $\omega_{Schwelle\_krit}$ wiederholt.

Überschreitet die Winkelgeschwindigkeit $\omega(n)$ hingegen den vorgegebenen kritischen Winkelgeschwindigkeitsschwellwert $\omega_{Schwelle\_krit}$, so wird in einem Verfahrensschritt 40 als nächstes geprüft, ob der Betrag der ermittelten Winkelposition $\varphi(n)$ des Kraftfahrzeugs größer als ein vorgegebener kritischer Schwellwert $\varphi_{Schwelle\_krit}$ ist (40).

Wenn dies nicht der Fall ist, so wird im nächsten Rechenschritt n+1 das Verfahren beginnend mit Schritt 34 wiederholt.

Ist die ermittelte Winkelposition $\varphi(n)$ hingegen größer als der vorgegebene kritische Schwellwert $\varphi_{Schwell\_krit}$, so wird in einem Verfahrenschritt 42 als nächstes geprüft, ob die Winkelposition $\varphi(n)$ des aktuellen Rechenschritts n größer als die Winkelposition $\varphi(n-1)$ des vorherigen Rechenschritts ist, d.h. es wird geprüft, ob sich der Rotationswinkel des Fahrzeugs im Vergleich zum Rotationswinkel der letzten Periode T1 erhöht hat.

Ist dies der Fall, so wird in einem Verfahrensschritt 44 als nächstes geprüft, ob vorbestimmte laterale Bedingungen erfüllt sind. Bei diesen lateralen Bedingungen kann es sich beispielsweise um die Geschwindigkeit und/oder Beschleunigung des Kraftfahrzeugs in Y-Richtung handeln. Sind diese vorbestimmten lateralen Bedingungen nicht erfüllt, so wird das Verfahren im nächsten Rechenschritt n+1 mit Schritt 34 fortgesetzt.

Sind die lateralen Bedingungen hingegen erfüllt, so wird in einem Verfahrensschritt 46 als nächstes geprüft, ob zusätzlich auch vorbestimmte vertikale Bedingungen erfüllt sind. Entsprechend den lateralen Bedingungen kann es sich bei den vertikalen Bedingungen um die Geschwindigkeit und/oder Beschleunigung des Fahrzeugs in Z-Richtung handeln.

Sind diese vertikalen Bedingungen nicht erfüllt, so gilt auch hier, dass das Verfahren im nächsten Rechenschritt n+ 1 mit dem Verfahrensschritt 34 fortgesetzt wird.

Sind die vertikalen Bedingungen hingegen erfüllt, so wird in einem nächsten Verfahrensschritt 48 geprüft, ob das Fahrzeugsicherheitssystem scharfgeschaltet ist. Ist das Fahrzeugsicherheitssystem nicht scharfgeschaltet, so beginnt das Verfahren im folgenden Rechenschritt n+ 1 wieder mit dem Verfahrensschritt 34.

Befindet sich das Fahrzeugsicherheitssystem hingegen in einem scharfen Zustand, so wird es in einem Verfahrensschritt 50 aktiviert. Durch die Aktivierung des Fahrzeugsicherheitssystems können geeignete Maßnahmen zum Schutz der Fahrzeuginsassen im Fall einer gefährlichen Roll- oder Überschlagbewegung des Fahrzeugs eingeleitet werden. Beispielsweise kann ein Überrollbügel in Position gebracht, eine verstärkte Nackenstütze ausgefahren und/oder ein Airbag ausgelöst werden.

**Patentansprüche**

1. Verfahren zum Beurteilen einer Rotationsbewegung, insbesondere einer Roll- oder Überschlagbewegung, eines Kraftfahrzeugs, bei dem
   die Winkelgeschwindigkeit des Fahrzeugs um wenigstens eine Fahrzeugachse, insbesondere um die Längsachse, die horizontale Querachse und/oder die vertikale Querachse des Fahrzeugs, mehrfach gemessen wird,
   die Winkelbeschleunigung des Fahrzeugs um die wenigstens eine Fahrzeugachse ermittelt wird, und

die ermittelte Winkelbeschleunigung bei der Beurteilung der Rotationsbewegung berücksichtigt wird,
**dadurch gekennzeichnet,**
**dass** die Winkelbeschleunigung aus zwei gemessenen Winkelgeschwindigkeiten ermittelt wird und die Gefährlichkeit einer Rotationsbewegung des Fahrzeugs aus der Stärke und der Dauer der Winkelbeschleunigung ermittelt wird.

2. Verfahren nach Anspruch 1,
**dadurch gekennzeichnet,**
**dass** die Winkelgeschwindigkeit und die Winkelbeschleunigung zumindest zeitweise periodisch mit einer Periode T1 ermittelt werden.

3. Verfahren nach Anspruch 1 oder 2,
**dadurch gekennzeichnet,**
**dass** ein zur Beurteilung der Rotationsbewegung beitragender Zähler erhöht wird (14, 18, 22), wenn die Winkelbeschleunigung einer Periode T1 einen Schwellwert überschreitet (12, 16, 20) und/oder der Zähler erniedrigt wird (24), wenn die Winkelbeschleunigung einer Periode T1 den Schwellwert unterschreitet (20).

4. Verfahren nach Anspruch 3,
**dadurch gekennzeichnet,**
**dass** die Erhöhung und/oder Erniedrigung des Zählers um einen vorgegebenen festen, insbesondere ganzzahligen, Betrag erfolgt.

5. Verfahren nach Anspruch 3,
**dadurch gekennzeichnet,**
**dass** die Erhöhung und/oder Erniedrigung des Zählers um einen vorgegebenen, insbesondere ganzzahligen, Betrag erfolgt (14, 18, 22), dessen Größe von der Abweichung der ermittelten Winkelbeschleunigung von dem Schwellwert abhängig ist.

6. Verfahren nach Anspruch 3,
**dadurch gekennzeichnet,**
**dass** die Erhöhung und/oder Erniedrigung des Zählers proportional zur Abweichung der ermittelten Winkelbeschleunigung von dem Schwellwert ist.

7. Verfahren nach einem der Ansprüche 3 bis 6,
**dadurch gekennzeichnet,**
**dass** die Rotationsbewegung als kritisch eingestuft wird (34), wenn der Zähler einen vorbestimmten Zählerschwellwert überschreitet (30).

8. Verfahren nach Anspruch 2,
**dadurch gekennzeichnet,**
**dass** zusätzlich eine zweite Winkelbeschleunigung aus zwei Winkelgeschwindigkeiten ermittelt wird, die ein Zeitintervall T2 definieren, welches ein ganzzahliges Vielfaches der Periode T1 ist.

9. Verfahren nach Anspruch 8,
**dadurch gekennzeichnet,**
**dass** die Rotationsbewegung als kritisch eingestuft wird, wenn sowohl die zweite Winkelbeschleunigung als auch jede innerhalb des Zeitintervalls T2 ermittelte erste Winkelbeschleunigung jeweils einen vorbestimmten Schwellwert überschreitet.

10. Verfahren zum Aktivieren eines Fahrzeugsicherheitssystems, bei dem das Fahrzeugsicherheitssystem aktiviert wird (50), wenn eine nach einem Verfahren gemäß Anspruch 7 oder 9 detektierte Rotationsbewegung eines Kraftfahrzeugs um eine Fahrzeugachse, insbesondere um die Längsachse, die horizontale Querachse und/oder die vertikale Querachse des Fahrzeugs, als kritisch eingestuft wird (34).

11. Verfahren nach Anspruch 10,
**dadurch gekennzeichnet,**
**dass** das Fahrzeugsicherheitssystem nur dann aktiviert wird, wenn zusätzlich die Winkelgeschwindigkeit (38) und/oder die Winkelposition (40) des Fahrzeugs bezüglich der Fahrzeugachse jeweils einen vorbestimmten kritischen Schwellwert überschreiten bzw. überschreitet.

12. Verfahren nach Anspruch 10 oder 11,
    **dadurch gekennzeichnet,**
    **dass** das Fahrzeugsicherheitssystem nur dann aktiviert wird, wenn zusätzlich die Winkelbeschleunigung, die Winkelgeschwindigkeit und/oder die Winkelposition des Fahrzeugs bezüglich der anderen Fahrzeugachse oder Fahrzeugachsen jeweils innerhalb eines vorbestimmten kritischen Bereiches liegen bzw. liegt.

13. Vorrichtung zur Beurteilung einer Rotationsbewegung, insbesondere einer Roll- oder Überschlagbewegung, eines Kraftfahrzeugs, mit
    wenigstens einem Sensor zum Messen der Winkelgeschwindigkeit des Fahrzeugs um eine Fahrzeugachse, insbesondere um die Längsachse, die horizontale Querachse oder die vertikale Querachse des Fahrzeugs,
    **gekennzeichnet durch**
    eine mit dem Sensor verbundene Recheneinheit zur Ermittlung der Winkelbeschleunigung des Fahrzeugs um die Fahrzeugachse aus zwei gemessenen Winkelgeschwindigkeiten,
    eine mit der Recheneinheit verbundene Komparatoreinheit zum Vergleichen der ermittelten Winkelbeschleunigung mit einem vorgegebenen Schwellwert, und
    eine mit der Komparatoreinheit verbundene Auswerteeinheit zum Auswerten einer Abweichung der ermittelten Winkelbeschleunigung von dem Schwellwert und zum Ermitteln der Gefährlichkeit einer Rotationsbewegung des Fahrzeugs aus der Stärke und der Dauer der Winkelbeschleunigung.

**Claims**

1. A method of evaluating a rotational movement, in particular a rolling or rollover movement, of a motor vehicle, wherein the angular speed of the vehicle about at least one vehicle axis, in particular about the longitudinal axis, the horizontal transverse axis and/or the vertical transverse axis of the vehicle, is measured a plurality of times; the angular acceleration of the vehicle about the at least one vehicle axis is determined; and the determined angular acceleration is taken into account in the evaluation of the rotational movement,
   **characterized in that**
   the angular acceleration is determined from two measured angular speeds; and the danger of a rotational movement of the vehicle is determined from the magnitude and the duration of the angular acceleration.

2. A method in accordance with claim 1, **characterized in that** the angular speed and the angular acceleration are determined periodically with a period T1 at least at times.

3. A method in accordance with claim 1 or claim 2, **characterized in that** a counter contributing to the evaluation of the rotational movement is incremented (14, 18, 22) when the angular acceleration of a period T1 exceeds a threshold value (12, 16, 20) and/or the counter is reduced (24) when the angular acceleration of a period T1 falls below the threshold value (20).

4. A method in accordance with claim 3, **characterized in that** the incrementing and/or reducing of the counter take/ takes place by a pre-determined fixed amount, in particular a whole-number amount.

5. A method in accordance with claim 3, **characterized in that** the incrementing and/or reducing of the counter take/ takes place by a pre-determined amount (14, 18, 22), in particular a whole-number amount, whose size is dependent on the difference of the determined angular acceleration from the threshold value.

6. A method in accordance with claim 3, **characterized in that** the incrementing and/or reducing of the counter is proportional to the difference of the determined angular acceleration from the threshold value.

7. A method in accordance with any one of the claims 3 to 6, **characterized in that** the rotational movement is classified as critical (34) when the counter exceeds a pre-determined threshold counter value (30).

8. A method in accordance with claim 2, **characterized in that** a second angular acceleration is additionally determined from two angular speeds which define a time interval T2 which is a whole-number multiple of the period T1.

9. A method in accordance with claim 8, **characterized in that** the rotational movement is classified as critical when both the second angular acceleration and every first angular acceleration determined within the time interval T2 each exceeds a pre-determined threshold value.

10. A method of activating a vehicle safety system in which the vehicle safety system is activated (50) when a rotational movement of a motor vehicle about a vehicle axis, in particular about the longitudinal axis, the horizontal transverse axis and/or the vertical transverse axis of the vehicle detected in accordance with a method in accordance with claim 7 or claim 9, is classified as critical (34).

11. A method in accordance with claim 10, **characterized in that** the vehicle safety system is only activated when the angular speed (38) and/or the angular position (40) of the vehicle with respect to the vehicle axis additionally exceeds or exceed a pre-determined critical threshold.

12. A method in accordance with claim 10 or claim 11, **characterized in that** the vehicle safety system is only activated when the angular acceleration, the angular speed and/or the angular position of the vehicle with respect to the other vehicle axis or vehicle axes each additionally lies or lie within a pre-determined critical range.

13. An apparatus for the evaluating a rotational movement, in particular a rolling or rollover movement, of a motor vehicle, comprising

at least one sensor for the measurement of the angular speed of the vehicle about a vehicle axis, in particular about the longitudinal axis, the horizontal transverse axis and/or the vertical transverse axis of the vehicle,
**characterized by**
a calculation unit connected to the sensor for the determination of the angular acceleration of the vehicle about the vehicle axis from two measured angular speeds;
a comparator unit connected to the calculation unit for the comparison of the determined angular acceleration with a pre-determined threshold value; and
an evaluation unit connected to the comparator unit for the evaluation of a difference of the determined angular acceleration from the threshold value and for the determination of the danger of a rotational movement of the vehicle from the magnitude and the duration of the angular acceleration

## Revendications

1. Procédé d'évaluation d'un mouvement de rotation, en particulier d'un mouvement de roulis ou de retournement d'un véhicule automobile, lors duquel
la vitesse angulaire du véhicule autour d'au moins un axe de véhicule, en particulier, autour de l'axe longitudinal, l'axe transversal horizontal et/ou l'axe transversal vertical du véhicule, est mesurée à plusieurs reprises,
l'accélération angulaire du véhicule autour du au moins un axe de véhicule est déterminée, et
l'accélération angulaire déterminée est prise en compte lors de l'évaluation du mouvement de rotation,
**caractérisé**
**en ce que** l'accélération angulaire est déterminée à partir de deux vitesses angulaires mesurées, et
le risque lié au mouvement de rotation du véhicule est déterminé à partir de l'intensité et de la durée de l'accélération angulaire.

2. Procédé selon la revendication 1, **caractérisé en ce que** la vitesse angulaire et l'accélération angulaire sont déterminées, au moins par moments, périodiquement, avec une période T1.

3. Procédé selon la revendication 1 ou 2, **caractérisé en ce que** l'état d'un compteur, contribuant à l'évaluation du mouvement de rotation, est augmenté (14, 18, 22), lorsque l'accélération angulaire d'une période T1 dépasse une valeur seuil (12, 16, 20), et/ou que l'état du compteur est abaissé (24) lorsque l'accélération angulaire d'une période T1 descend au-dessous de la valeur seuil (20).

4. Procédé selon la revendication 3, **caractérisé en ce que** l'augmentation et/ou l'abaissement de l'état du compteur se fait/se font de la valeur d'un montant fixe prédéterminé, en particulier, par nombre entier.

5. Procédé selon la revendication 3, **caractérisé en ce que** l'augmentation et/ou l'abaissement de l'état du compteur se fait/se font de la valeur d'un montant prédéterminé, en particulier par nombre entier (14, 18, 22) dont la valeur dépend de l'écart entre l'accélération angulaire déterminée et la valeur seuil.

**6.** Procédé selon la revendication 3, **caractérisé en ce que** l'augmentation et/ou l'abaissement du compteur est/sont proportionnel(les) à l'écart entre l'accélération angulaire déterminée et la valeur seuil.

**7.** Procédé selon l'une des revendications 3 à 6, **caractérisé en ce que** le mouvement de rotation est jugé comme critique (34) lorsque l'état du compteur dépasse une valeur seuil de compteur prédéterminée (30).

**8.** Procédé selon la revendication 2, **caractérisé en ce qu'**en plus une deuxième accélération angulaire, obtenue à partir de deux accélérations angulaires, est déterminée, qui définissent un intervalle de temps T2 qui est un multiple entier de la période T1.

**9.** Procédé selon la revendication 8, **caractérisé en ce que** le mouvement de rotation est jugé comme critique lorsque tant la deuxième accélération angulaire, qu'également toute première accélération angulaire, déterminée dans les limites de l'intervalle de temps T2, dépassent respectivement une valeur seuil prédéterminée.

**10.** Procédé d'activation d'un système de sécurité de véhicule, pour lequel le système de sécurité du véhicule est activé (50), lorsqu'un mouvement de rotation, détecté selon un procédé selon la revendication 7 ou 9, d'un véhicule automobile autour d'un axe de véhicule, en particulier autour de l'axe longitudinal, l'axe transversal horizontal et/ou l'axe transversal vertical du véhicule, est jugé comme critique (34).

**11.** Procédé selon la revendication 10, **caractérisé en ce que** le système de sécurité du véhicule n'est activé que lorsqu'en plus la vitesse de véhicule (38) et/ou la position angulaire (40) du véhicule par rapport à l'axe de véhicule dépasse, respectivement dépassent chaque fois une valeur seuil critique prédéterminée.

**12.** Procédé selon la revendication 10 ou 11, **caractérisé en ce que** le système de sécurité pour véhicule n'est activé que, si en plus, l'accélération angulaire, la vitesse angulaire et/ou la position angulaire du véhicule par rapport à l'autre axe du véhicule ou aux autres axes de véhicule est ou sont chaque fois dans les limites d'une plage critique prédéterminée.

**13.** Dispositif d'évaluation d'un mouvement de rotation, en particulier, d'un mouvement de roulis ou de retournement d'un véhicule automobile, comprenant :

au moins un capteur pour mesurer la vitesse angulaire du véhicule autour d'un axe de véhicule, en particulier, autour de l'axe longitudinal, l'axe transversal horizontal ou l'axe transversal vertical du véhicule,

**caractérisé par**

une unité de calcul, reliée au capteur, afin de déterminer l'accélération angulaire du véhicule autour de l'axe de véhicule, à partir de deux vitesses angulaires mesurées,
une unité de comparateur, reliée à l'unité de calcul, pour comparer l'accélération angulaire déterminée à une valeur seuil prédéterminée, et
une unité d'évaluation, reliée à l'unité comparateur, pour évaluer un écart entre l'accélération angulaire déterminée et la valeur seuil, et pour déterminer le risque d'un mouvement de rotation du véhicule à partir de l'intensité et de la durée de l'accélération angulaire.

# FIG. 1

$$START$$

$$n = n+1$$

10 — $|\alpha(n)| \geq \alpha_{Schwelle\_min}$ & $|\omega(n)| \geq \omega_{Schwelle\_min}$

JA

NEIN

12 — $|\alpha(n)| \geq \alpha_{Schwelle\_hoch}$

JA

14 — $z = z + \Delta z_{groß}$

NEIN

16 — $|\alpha(n)| \geq \alpha_{Schwelle\_mittel}$

JA

18 — $z = z + \Delta z_{mittel}$

NEIN

20 — $|\alpha(n)| \geq \alpha_{Schwelle\_niedrig}$

JA

22 — $z = z + \Delta z_{klein}$

NEIN

$z = 0$

24 — $z = z - \Delta z_{red}$

26 — $z \leq 0$

JA

28 — $z = 0$

NEIN

30 — $z \geq z_{max}$

JA

NEIN

32 — $z = z_{max}$

34 — KRITISCHE ROTATIONS-BEWEGUNG

# FIG. 2

34 — KRITISCHE ROTATIONSBEWEGUNG

38 — $|\omega(n)| > \omega_{Schwelle\_krit}$

JA

NEIN

40 — $|\varphi(n)| > \varphi_{Schwelle\_krit}$

JA

NEIN

42 — $|\varphi(n)| > |\varphi(n-1)|$

JA

NEIN

44 — LATERALE BEDINGUNGEN ERFÜLLT

JA

NEIN

46 — VERTIKALE BEDINGUNGEN ERFÜLLT

JA

NEIN

SICHERHEITS-SYSTEM SCHARF ?

NEIN

JA

48

AKTIVIERUNG/ AUSLÖSUNG

50